# EUROPÄISCHE PATENTANMELDUNG

(11) **EP 1 779 751 A1**
(43) Veröffentlichungstag der Anmeldung: **02.05.2007**
(21) Anmeldenummer: 06022253.6
(22) Anmeldetag: 24.10.2006
(51) Int. Cl.: A47G 7/07, A01G 5/04

(54) **Blumenhalter und Rohmaterial zur Bildung eines Blumenhalters**

(30) Priorität: 25.10.2005 DE 102005051074
(71) Anmelder: Biedermann, Jutta, 82211 Herrsching (DE)
(72) Erfinder: Biedermann, Jutta, 82211 Herrsching (DE)
(74) Vertreter: Roos, Peter

(57) **Zusammenfassung**

Die Erfindung betrifft eine Vorrichtung (10i) zum Halten von Blumen, umfassend einen plattenförmigen Trägerkörper (12i), der eine Öffnungsanordnung (14i) zum Durchstecken von Blumenstielen aufweist.

Um die Einsatzmöglichkeiten sowie die gestalterische Freiheit bei der Verwendung eines solchen Blumenhalters (10i) zu vergrößern, ist gemäß der Erfindung vorgesehen, dass der Trägerkörper (12i) plastisch verform bar ist.

Gemäß einer Weiterbildung wird ein Rohmaterial vorgeschlagen, welches insbesondere im gewerblichen Bereich (z. B. floristischer Bereich, Hotel- und Gaststättengewerbe, Raumausstattung etc.) sehr vorteilhaft als Vorrat bzw. Sortiment an solchen Blumenhaltern (10i) verwendet werden kann. Dieses Rohmaterial ist als plastisch verformbare und mit Öffnungen (14i) zum Durchstecken von Blumenstielen versehene Trägerkörpermatte (30i) ausgebildet, von welcher einzelne Blumenhalter (10i) bedarfsweise abgetrennt werden können.

## Beschreibung

Die Erfindung betrifft eine Vorrichtung zum Halten von Blumen, nachfolgend auch als "Blumenhalter" bezeichnet, umfassend einen plattenförmigen Trägerkörper, der eine zum Durchstecken von Blumenstielen geeignete Öffnungsanordnung aufweist. Ferner betrifft die Erfindung ein Rohmaterial zur Bildung derartiger Blumenhalter sowie die Verwendung eines derartigen Rohmaterials.

Ein Blumenhalter der vorstehend erwähnten Art ist beispielsweise aus der Deutschen Gebrauchsmusterschrift DE 20 2005 005 542 U1 bekannt. Der bekannte Blumenhalter kann sehr vorteilhaft zum Arrangieren von Pflanzen, insbesondere Blumen, und anderen Dekorationselementen eingesetzt werden. Zu diesem Zweck können beispielsweise die Blumenstiele eines Blumenstraußes durch eine oder mehrere Öffnungen des Trägerkörpers hindurch gesteckt werden, um die einzelnen Blumen in einer gewünschten gegenseitigen Lage zu halten. Durch die plattenförmige Ausbildung des Trägerkörpers kann derselbe z. B. samt Blumenstrauß vorteilhaft auf eine Blumenvase oder -schale derart aufgesetzt werden, dass die nach unten ragenden Blumenstiele in Wasser ragen, welches sich in der Vase bzw. Schale befindet.

Problematisch ist bei dem bekannten Blumenhalter, dass dieser auf Grund seiner vorgegebenen Größe und Form nicht stabil auf jedes beliebige Behältnis (z. B. Blumenvase) aufgesetzt werden kann. Ferner ist es als nachteilig zu betrachten, dass der bekannte Blumenhalter eine durch seine Größe und Form fest vorgegebene Ästhetik besitzt.

Es ist daher eine Aufgabe der Erfindung, die Einsatzmöglichkeiten sowie die gestalterische Freiheit bei der Verwendung eines Blumenhalters der eingangs beschriebenen Art zu vergrößern.

Gemäß eines ersten Aspekts der Erfindung wird diese Aufgabe bei einem Blumenhalter dadurch gelöst, dass der Trägerkörper plastisch verformbar ist.

Durch die plastische Verformbarkeit können sowohl die für die Aufsetzbarkeit des Blumenhalters relevante Größe (laterale Ausdehnung) und Form als auch das ästhetische Erscheinungsbild des Blumenhalters individuell angepasst werden.

Frische Blumen sind aus dem täglichen Leben nicht mehr wegzudenken. Sie beeinflussen Entscheidungen, Lebensmut, heben Stimmungen und die Sinne, wenn auch nur ein kleiner Duftzweig von Jasmin oder Lavendel durch den Blumenhalter geschickt gehalten in einem Glas oder dergleichen auf dem Schreibtisch steht. Durch die plastische Verformbarkeit des erfindungsgemäßen Blumenhalters kann hierbei vorteilhaft nach Bedarf die Ergonomie und Strenge für Ausdruck und Ästhetik dem jeweiligen Ambiente entsprechend gewählt werden.

Der Begriff "Blumenhalter" ist im Rahmen der Erfindung sehr weit zu verstehen. Wenngleich dieser Halter in einer bevorzugten Verwendungsart zur Präsentation bzw. zum Arrangement von Blumenschmuck eingesetzt wird, so können ohne weiteres alternativ oder zusätzlich andere Dekorationselemente gehalten werden.

Der Begriff "plastische Verformbarkeit" soll bedeuten, dass der Trägerkörper einerseits im Gebrauch eine ausreichende Formstabilität besitzt, um diesen als sicheren Aufsatz auf Vasen, Gläsern oder dergleichen verwenden zu können, und andererseits ohne ein Werkzeug verformbar ist.

Insbesondere kann ein Grad an Verformbarkeit des Trägerkörpers vorgesehen sein, bei welchem ein durchschnittlich kräftiger Erwachsener (oder sogar ein Kind) den Trägerkörper mit bloßen Händen verbiegen kann. Hierfür geeignete Materialien sind dem Fachmann aus anderen technischen Gebieten hinlänglich bekannt.

In einer bevorzugten Ausführungsform ist der Trägerkörper aus einem Verbundmaterial mit einer biegesteifen, jedoch plastisch verformbaren Komponente und einer biegeschlaffen Komponente gebildet.

Die biegesteife, jedoch plastisch verformbare Komponente kann in einfacher Weise z. B. aus Metall gebildet sein. Eine solche Metallkomponente (z. B. ein Aluminiummaterial) kann z. B. als mehr oder weniger dünne Lochrasterplatte ausgebildet sein. Auch kann die verformbare Komponente z. B. als Drahtgitter ausgebildet sein.

Die biegeschlaffe Komponente ist bevorzugt aus Kunststoff gebildet. Hierfür geeignete Materialien sind beispielsweise PE, PET etc. Zur Bildung dieser Komponente können alternativ oder zusätzlich auch Naturmaterialien eingesetzt werden.

Die biegesteife, jedoch plastisch verformbare Komponente kann z. B. einen flächig ausgedehnten Kern des Trägerkörpers ausbilden, z. B. als einseitig oder beidseitig in einem flexiblen Kunststoffmaterial eingebettete Komponente.

In einer Weiterbildung der Erfindung ist vorgesehen, dass der Trägerkörper wenigstens eine thermoplastische Materialkomponente aufweist, deren plastische Verformbarkeit sich durch eine mäßige Wärmeeinwirkung (z. B. Erwärmung auf eine Temperatur von etwa 30 bis 60°C) merklich erhöht. Hierbei kann der Trägerkörper z. B. aus dieser thermoplastischen Komponente (z. B. Kunststoffmaterial) bestehen. Alternativ bildet diese thermoplastische Komponente eine der oben erwähnten Komponenten des aus einem Verbundmaterial hergestellten Trägerkörpers.

In einer anderen Ausgestaltung der Erfindung ist vorgesehen, dass der Trägerkörper wenigstens eine Materialkomponente aufweist, deren plastische Verformbarkeit sich durch ein Befeuchten oder insbesondere ein Einweichen mit Wasser merklich erhöht. Nach einem solchen Vorbereitungsprozess kann das Formen und anschließende Trocknen zur Aushärtung vor der endgültigen Verwendung erfolgen.

Auch kann der Trägerkörper aus einem Recyclingmaterial gebildet sein oder eine solche Materialkomponente aufweisen. Darunter soll ein Material zu verstehen sein, welches ein Produkt eines Recyclingprozesses ist und/oder selbst recyclebar ist. Alternativ oder zusätzlich kann ein solches Material auch kompostierbar sein. Dies besitzt den besonderen Vorteil, dass der Benutzer dieses Material nach ein- oder mehrmaliger Verwendung auch selbst entsorgen kann.

Der Trägerkörper kann beispielsweise eine Materialkomponente umfassend Holz-, Papier-, Pflanzenfasern, Kork oder Stein-, Glas- oder Naturwolle aller Art besitzen. Eine solche oder eine andere Materialkomponente kann insbesondere z. B. mit Leim-, Harz-, Kunstharz-, Kautschuk- oder Stärkematerialien sowie Gels verschiedener Art, Lack- bzw. Wachsverbindungen, Lehm-Tonbeimischungen und sonstigen Emulgatoren und chemischen Hilfsmitteln verarbeitet sein. Insbesondere ist hierbei an Additive bzw. Behandlungen zu denken, welche die Elastizität, Homogenität und/oder Stabilität erhöhen oder sicherstellen.

In einer Ausführungsform ist vorgesehen, dass der Trägerkörper von einem Material gebildet ist, welches z. B. in Baumärkten unter Bezeichnungen wie "Formbares Kunstglas" oder "Flexibles Plexiglas" erhältlich ist.

Der Trägerkörper kann z. B. transparent, bunt, gemustert oder metallfarben sein.

Die gemäß der Erfindung vorgesehene Verformbarkeit ermöglicht in ästhetischer Hinsicht z. B. eine wellenähnliche Biegung des Blumenhalters mit hohen und tiefen Bereichen, um eine räumliche Gestaltung zu realisieren.

In einer Ausführungsform ist vorgesehen, dass der Trägerkörper an wenigstens einer seiner Flachseiten eine strukturierte Oberfläche aufweist. Die betreffende Oberfläche kann beispielsweise eine Wellenform besitzen. Alternativ oder zusätzlich kann die Oberfläche auch andere Erhabenheiten und/oder Vertiefungen aufweisen, insbesondere mit ornamentartiger bzw. reliefartiger Struktur.

In einer bevorzugten Ausführungsform ist vorgesehen, dass der Trägerkörper aus einem mit Wachs imprägnierten Fasermaterial gebildet ist. Bei einer solchen Vorrichtung kann das Fasermaterial die oben bereits erwähnte "biegeschlaffe Komponente" und das Wachs die "biegesteife, jedoch plastisch verformbare Komponente" bilden. Das Fasermaterial kann hierbei synthetische Fasern und/oder Naturfasern enthalten. In einer Ausführungsform ist vorgesehen, dass das Fasermaterial ein Papier, ein Karton oder eine Pappe ist. Eine solche Vorrichtung kann in einfacher Weise dadurch gefertigt werden, dass entsprechende Zuschnitte eines Kartons bzw. einer Pappe, welche bevorzugt bereits die Öffnungsanordnung zum Durchstecken der Blumenstiele aufweisen, in heißes Wachs eingetaucht werden, um den Karton bzw. die Pappe zu imprägnieren. In einer Weiterbildung ist vorgesehen, dass nach diesem Imprägniervorgang noch eine weitere Schicht aufgebracht wird, z. B. eine dauerelastische Lackschicht.

Für viele Anwendungsfälle ist es bevorzugt, wenn der Trägerkörper eine mittlere (über seine laterale Ausdehnung gemittelte) Dicke im Bereich von 0,8 bis 15 mm aufweist.

Eine bevorzugte Verwendung des Blumenhalters besteht im Arrangement von Blumenschmuck, insbesondere Frischblumenschmuck zu Dekorationszwecken. Derartiger Schmuck wirkt nicht nur durch Farbe, sondern besonders auch durch die Vielfalt an Blumenformen, die mit dem hier beschriebenen Blumenhalter individuell betont werden kann. Durch die Öffnungsanordnung des Trägerkörpers ist vorteilhaft ermöglicht, dass jede Blume oder dergleichen einzeln für sich in ihrer Eigenart zur Geltung kommt und durch den Halt in dem verwendeten Dekorationsgefäß (z. B. Blumenvase etc.) sich je nach Bedarf optimal präsentiert.

Neben einer beispielsweise gewerblichen Verwendung zu Dekorationszwecken kann der Blumenhalter auch z. B. als Geschenkartikel Verwendung finden.

Gemäß eines zweiten Aspekts der Erfindung wird die obige Aufgabe durch ein Rohmaterial zur Bildung einer Mehrzahl von Blumenhaltern der oben beschriebenen Art gelöst, wobei dieses Rohmaterial ausgebildet ist als plastisch verformbare und mit geeigneten Öffnungen (zum Durchstecken von Blumenstielen) versehene Trägerkörpermatte.

Mit einem solchen Rohmaterial (Trägerkörpermatte) steht dem Benutzer gewissermaßen ein Vorrat an Blumenhaltern zur Verfügung, für welche sämtliche der oben bereits beschriebenen Gestaltungsvarianten und damit verbundenen Vorteile möglich sind.

In einer Ausführungsform ist beispielsweise vorgesehen, dass das Rohmaterial aus einem mit Wachs imprägnierten Fasermaterial, insbesondere z. B. einem mit Wachs imprägnierten Karton oder einer Pappe gebildet ist.

In einer bevorzugten Ausführungsform des Rohmaterials ist dieses zu einer Rohmaterialrolle aufgerollt. Damit ist insbesondere ein einfacher Transport und eine platzsparende Aufbewahrung ermöglicht.

In einer Ausführungsform ist vorgesehen, dass das Rohmaterial dazu geeignet ausgebildet ist, um mit einer herkömmlichen Schere (z. B. Bastelschere oder Haushaltsschere) einen Blumenhalter in einer gewünschten Form aus dem Rohmaterial ausschneiden zu können. Falls das Rohmaterial eine vergleichsweise große Festigkeit besitzt, kommt alternativ in Betracht, das Rohmaterial als ein "Set" zusammen mit einer entsprechend geeignet dimensionierten Schere vorzusehen.

Bei der schneidbaren Ausbildung des Rohmaterials kann der Benutzer sehr vorteilhaft die gewünschte Form des Blumenhalters selbst bestimmen und aus dem Material der Trägerkörpermatte herausschneiden. Diese Möglichkeit des eigenen Zuschnitts fördert die Gestaltungsideen bzw. -vorstellungen des Benutzers.

In einer Ausführungsform ist vorgesehen, dass das Rohmaterial an wenigstens einer seiner Flachseiten Schneidlinienmarkierungen als Formvorgabe für ein Ausschneiden eines Blumenhalters in einer durch eine Markierungslinie vorgegebenen Form aufweist. Derartige Schneidlinienmarkierungen können z. B. aufgedruckt oder als entsprechende Oberflächenstrukturierung (z. B. Rille) an der betreffenden Flachseite vorgesehen sein. Die Schneidlinienmarkierungen können z. B. ein Netzmuster bilden, bei welchem ein auszuschneidender Blumenhalter von einer oder mehreren "Elementarzellen" des Netzes gebildet werden kann. Die Markierungslinien eines Netzmusters können z. B. Formen von Blumenhaltern definieren, deren Flächeninhalte jeweils im Bereich von etwa 0,02 bis 0,1 m² liegen (oder einem Vielfachen davon, falls mehrere "Elementarnetzzellen" ausgeschnitten werden). Falls an beiden Flachseiten des Rohmaterials Markierungslinien vorgesehen sind, so können diese korrespondierend zueinander (deckungsgleich) verlaufen oder verschiedenartig verlaufen (um die beiden Flachseiten mit unterschiedlichen Formvorgaben zu versehen).

In einer Ausführungsform ist vorgesehen, dass die Schneidlinienmarkierungen lediglich über einen Teil der Gesamtfläche des Rohmaterials verteilt vorgesehen sind, so dass ein anderer Teil des Rohmaterials für einen individuellen Zuschnitt nach den ganz eigenen Vorstellungen des Benutzers verbleibt.

Alternativ oder zusätzlich zu den Schneidlinienmarkierungen ist in einer weiteren Ausführungsform vorgesehen, dass das Rohmaterial eine als Sollbruchstelle dienende Stanzlinienanordnung für ein Herausbrechen eines Blumenhalters in einer durch eine Stanzlinie vorgegebenen Form aufweist. Durch diese Gestaltung kann der Benutzer eine durch die Stanzung vorgegebene Form als Blumenhalter ganz einfach durch ein Knicken des Rohmaterials herausbrechen. In einer bevorzugten Weiterbildung ist hierbei vorgesehen, dass die Stanzlinienanordnung dem Benutzer ein Sortiment von herausbrechbaren Blumenhaltern bietet, die sich in ihrer Größe und/oder Form und/oder Öffnungsanordnung voneinander unterscheiden. Dies bietet den Vorteil, dass der Benutzer je nach Verwendungszweck bzw. gewünschtem ästhetischen Eindruck einen gerade passenden Blumenhalter auswählen kann. Betreffend die konkrete Anordnung der Stanzlinien sowie deren Flächenanteil an der Gesamtfläche des Rohmaterials gilt das vorstehend für die Schneidlinienmarkierungen Gesagte. Insbesondere kann auch bei einem vorgestanzten Rohmaterial ein Teil (z. B. mehr als 40 %) von solchen Linien freigehalten sein.

Was die Bereitstellung von einzelnen Blumenhaltern aus dem Rohmaterial anbelangt, so wurden vorstehend drei Möglichkeiten erläutert, nämlich ein Ausschneiden entlang von Schnittlinienmarkierungen, ein Ausschneiden nach Belieben sowie ein Ausbrechen entlang von Stanzlinien. In ein und demselben Rohmaterial (Trägerkörpermatte) können eine, zwei oder alle drei dieser Möglichkeiten realisiert sein, bevorzugt jeweils mit einem nicht unerheblichen Flächenanteil von beispielsweise jeweils mindestens 20 % der Rohmaterialgesamtfläche.

Die Erfindung wird nachfolgend anhand von Ausführungsbeispielen mit Bezug auf die beigefügten Zeichnungen weiter beschrieben. Es stellen dar:
- Fig. 1: ist eine Draufsicht eines Blumenhalters gemäß einer ersten Ausführungsform,
- Fig. 2: ist eine perspektivische Ansicht des Blumenhalters von Fig. 1 mit eingestecktem Blumenstrauß,
- Fig. 3: ist eine perspektivische Ansicht eines Blumenhalters gemäß einer weiteren Ausführungsform,
- Fig. 4: ist eine Darstellung zur Veranschaulichung einer Verwendung eines Blumenhalters in Verbindung mit einem Wasserbehältnis,
- Fig. 5: ist eine Darstellung zur Veranschaulichung des Anschneidens von Blumenstielen unter Verwendung des Blumenhalters von Fig. 4,
- Fig. 6: ist eine Darstellung zur Veranschaulichung einer Verwendung des Blumenhalters von Fig. 4 bei einem Wechsel des Wasserbehältnisses,
- Fig. 7 bis 10: sind der Fig. 1 entsprechende Draufsichten von Blumenhaltern gemäß weiterer Ausführungsformen,
- Fig. 11: ist eine perspektivische Darstellung eines individuell verformten Blumenhalters,
- Fig. 12: ist eine Darstellung zur Veranschaulichung der plastischen Verformbarkeit eines Blumenhalters,
- Fig. 13: ist eine perspektivische Ansicht einer Schablonenmatte zur Bildung einer Mehrzahl von Blumenhaltern,
- Fig. 14 bis 16: sind schematische Schnittansichten zur Veranschaulichung des Materialaufbaus der Schablonenmatte von Fig. 13 gemäß verschiedener Ausführungsformen,
- Fig. 17 bis 19: sind Draufsichten zur Veranschaulichung der Gestaltung eines biegesteifen, jedoch plastisch verformbaren Kernmaterials, welches für ein Rohmaterial zur Bildung von Blumenhaltern verwendet werden kann, und
- Fig. 20: ist eine schematische Darstellung zur Veranschaulichung der Variationsvielfalt betreffend die durch ein Rohmaterial bereitstellbaren Blumenhalterformen.

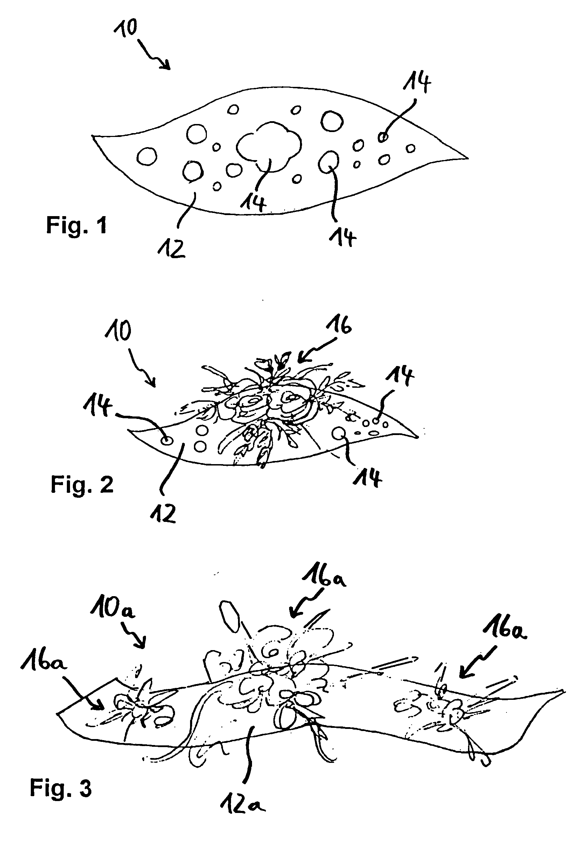

Fig. 1 zeigt einen Blumenhalter 10, der aus einem plattenförmigen Trägerkörper 12 besteht, in welchem eine Vielzahl von Durchgangsöffnungen 14 vorgesehen sind, welche zum Durchstecken von Blumenstielen geeignet dimensioniert sind und in ihrer Größe und Formgestaltung variieren. Für die meisten Anwendungsfälle ausreichend sind z. B. 1 bis 10 Öffnungen pro Blumenhalter.

Fig. 2 zeigt den Blumenhalter 10 mit einem von oben eingesteckten und arrangierten Blumenstrauß 16.

Eine Besonderheit des Blumenhalters 10 besteht darin, dass der Trägerkörper 12 plastisch verformbar ist, so dass der Benutzer den ästhetischen Eindruck des Blumenhalters 10 seinen eigenen Vorstellungen anpassen bzw. diese Ästhetik variieren kann. Der Trägerkörper 12 ist hierfür aus einem geeigneten Material oder Materialverbund ausgebildet, welches ein Verbiegen mit bloßen Händen erlaubt. In einer Ausführungsform ist z. B. vorgesehen, dass der Trägerkörper 12 im Wesentlichen aus einer mit Wachs imprägnierten Pappe besteht, deren Dicke bevorzugt im Bereich von etwa 2 mm bis 5 mm liegt. Das Verbiegen des Trägerkörpers 12 kann in diesem Fall durch einfaches Erwärmen mit der bloßen Hand vereinfacht werden. Als Material für eine solche Imprägnierung oder auch zusätzliche Beschichtung kommt insbesondere z. B. auch ein Öl, Harz, Lack oder Kunststoff in Betracht.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

Fig. 3 zeigt einen Blumenhalter 10a, der hinsichtlich seiner Form (Kontur) und Größe (Fläche) gegenüber dem mit Bezug auf Fig. 2 beschriebenen Blumenhalter abgewandelt ist. Während der in Fig. 2 dargestellte Blumenhalter 10 eher klein ist und eine verspielt geschwungene Kontur besitzt, bringt der etwas größer und eher rechteckig gestaltete Blumenhalter 10a gemäß Fig. 3 eine gewisse Strenge zum Ausdruck, die beispielsweise für die Dekoration eines Konferenzraumes angebrachter sein könnte. Wie der Blumenhalter 10 ist auch der Blumenhalter 10a von einem plastisch verformbaren Trägerkörper gebildet, so dass der Benutzer vorteilhaft noch mehr oder weniger große Formvariationen durch entsprechendes Verformen erzielen kann.

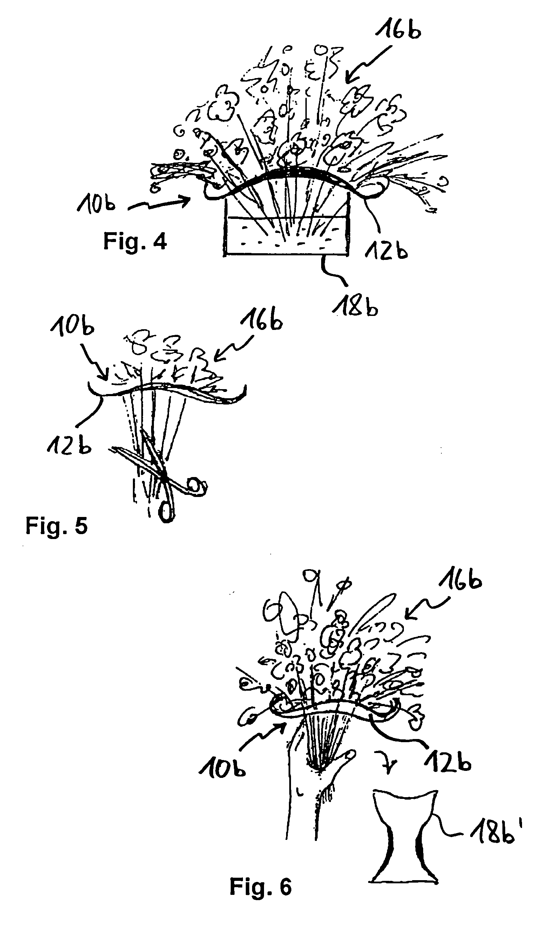

Fig. 4 veranschaulicht einen Blumenhalter 10b mit einem eingesteckten Blumenstrauß 16b, wobei der Blumenhalter 10b auf den oberen Rand einer Blumenvase 18b aufgesetzt ist, so dass die nach unten ragenden Pflanzenstiele in das in der Vase 18b befindliche Wasser ragen. In dieser Situation ist somit die lebensverlängernde Wasserversorgung zuverlässig sichergestellt, wobei ein weiterer Vorteil der Verwendung des Blumenhalters darin besteht, dass die Blumenstiele auf Grund des durch den Blumenhalter verliehenen Halts in gut definierter Weise (Tiefe) in das Wasser eintauchen.

Fig. 5 veranschaulicht die Möglichkeit des Anschneidens der Blumenstiele, ohne dass hierfür der Blumenstrauß 16b vom Blumenhalter 10b weggenommen werden muss. Vielmehr kann hierfür der Blumenhalter 10b samt Blumenstrauß 16b einfach von dem betreffenden Behältnis 18b abgenommen werden. Eine gezielte Wölbung des Blumenhalters 10b, insbesondere an seinem Rand, vereinfacht hierbei das Halten des Blumenhalters mit nur einer Hand.

Sodann kann der Blumenhalter 10b mit dem frisch angeschnittenen Blumenstrauß 16b wieder in die (ggf. mit frischem Wasser gefüllte) Vase 18b oder eine andere Vase 18b' (Fig. 6) eingestellt werden.

Der erfindungsgemäße Blumenhalter sorgt somit nicht lediglich für einen Zusammenhalt des Arrangements sondern vereinfacht auch die Frischwasserversorgung durch regelmäßigen Wasserwechsel und das in regelmäßigen Abständen notwendige Anschneiden der Blumenstiele. Diese Pflege kann sehr hygienisch, zeitsparend und wirtschaftlich durchgeführt werden. In diesem Sinne stellt der Blumenhalter vorteilhaft eine kapillargerechte Steckhilfe zur Gestaltung und Frischhaltung einer Schnittblumen-Dekoration dar.

Für die vorstehend erläuterte Handhabung des Blumenhalters samt damit arrangierten Blumenschmucks hat es sich als vorteilhaft herausgestellt, wenn der Blumenhalter wie z. B. in den Fig. 4 bis 6 dargestellt an seinem seitlichen Rand zur Bildung eines ästhetisch ansprechenden "Griffbereichs" aufgebogen oder aufgerollt ist. Neben dem ästhetischen sowie dem funktionalen Aspekt der hierfür vorteilhaften plastischen Verformbarkeit des Trägerkörpers gestattet diese Verformbarkeit auch eine gewisse Anpassung des Blumenhalters an die betreffende Form und Dimensionierung des oberen Vasenrands. Beispielsweise kann durch eine gezielte Verformung des Trägerkörpers für eine bestimmte Vase ein besonders guter Halt des Blumenhalters samt Blumenstrauß und/oder anderen Dekorationselementen gewährleistet werden.

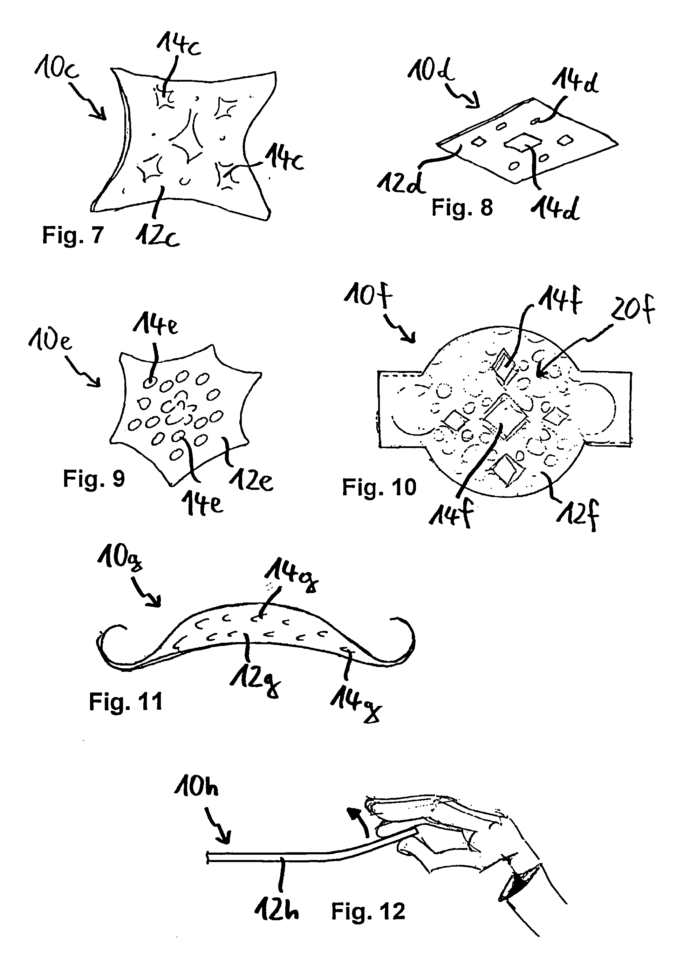

Die Fig. 7 bis 11 veranschaulichen lediglich beispielhaft alternative Formgestaltungen von Blumenhaltern 10c, 10d, 10e, 10f bzw. 10g.

Bei dem in Fig. 10 dargestellten Blumenhalter 10f weist ein Trägerkörper 12f an seiner Oberseite eine strukturierte Oberfläche mit einem Ornament 20f auf.

Fig. 12 veranschaulicht am Beispiel eines Blumenhalters 10h die Möglichkeit, den Trägerkörper 12h per Hand in gewünschter Weise zu verbiegen.

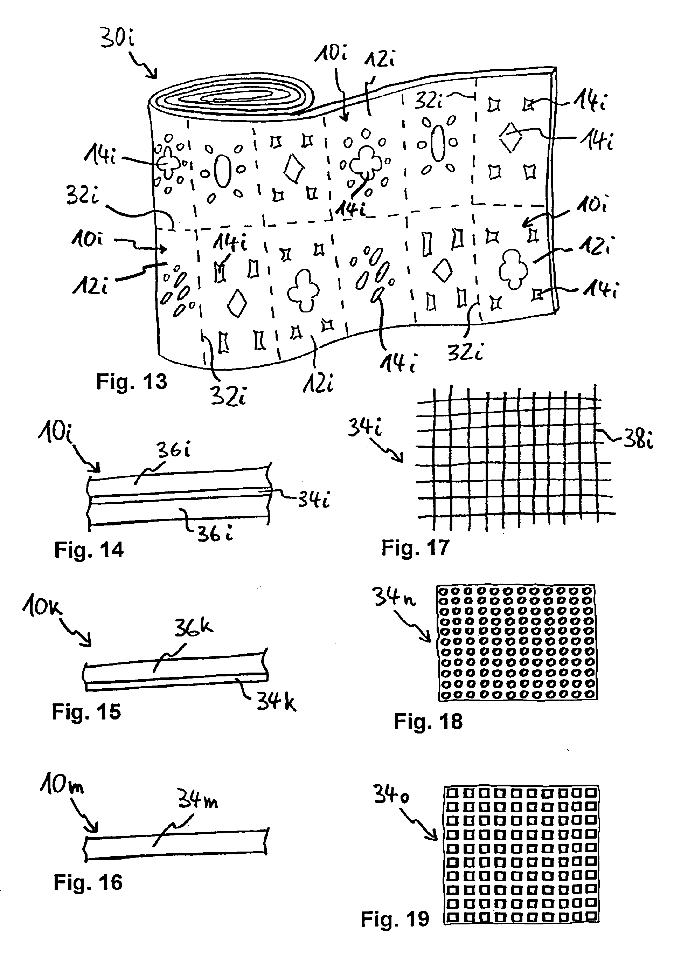

Fig. 13 zeigt ein Rohmaterial in Form einer Trägerkörpermatte 30i, die gewissermaßen ein Blumenhaltersortiment darstellt, von welchem in unten noch beschriebener Weise einzelne Blumenhalter 10i entnommen werden können.

Zu diesem Zweck ist das Rohmaterial bzw. die Trägerkörpermatte 30i als plastisch verformbare und mit Öffnungen 14i zum Durchstecken von Blumenstielen versehene Matte ausgebildet.

Im dargestellten Ausführungsbeispiel besitzt die Matte 30i eine regelmäßige Anordnung von Stanzlinien 32i, entlang derer die einzelnen Blumenhalter 10i bzw. "Schablonen" durch Abknicken einzeln von der Folienmatte 30i entnommen werden können. Mit anderen Worten ermöglicht die als Sollbruchstelle dienende Stanzlinienanordnung 32i eine Vereinzelung des Mattenmaterials in einzelne Blumenhalterabschnitte 10i.

Die einzelnen Blumenhalter 10i sind hierbei lediglich beispielhaft jeweils mit einer rechteckigen Form dargestellt. Alternativ oder zusätzlich können die Stanzlinien 32i auch derart verlaufen, dass ein Herausbrechen von andersartig geformten Blumenhaltern ermöglicht wird, insbesondere z. B. von runden, ovalen, rautenförmigen, streifenförmigen und/oder ornamentförmig begrenzten Blumenhaltern. Die entsprechenden Stanzmuster können je nach Bedarf angeordnet sein.

Ebenfalls abweichend vom dargestellten Ausführungsbeispiel können auch größere Anteile der Gesamtfläche der Matte 30i frei von Stanzlinien 32i sein, um ein individuelles Zuschneiden von Blumenhaltern in einer vom Benutzer frei gewählten Form zu ermöglichen. In dieser Hinsicht ist die Matte dann bevorzugt derart ausgebildet, dass diese mit einer herkömmlichen Haushaltsschere stumpfkantig (zum Ausschluss einer Verletzungsgefahr) zuschneidbar ist. Die gewünschten Blumenhalter bzw. Dekorationsschablonen können dann in beliebiger Form und Größe mit einer hinreichend stabilen Schere nach Bedarf herausgeschnitten werden.

Alternativ oder zusätzlich zu den vorstehend beschriebenen Stanzlinien können auch Schneidlinienmarkierungen als Formvorgabe für ein Ausschneiden von Blumenhaltern vorgesehen sein.

Die so zugeschnittenen oder herausgebrochenen Blumenhalter können auch ohne Zuhilfenahme irgendeines Werkzeugs mit den bloßen Händen gebogen und geformt werden. Falls das Rohmaterial 30i aus einem thermoplastischen Material besteht oder eine solche Materialkomponente aufweist, so kann die Verformung z. B. durch ein Tauchbad im warmen bis heißen Wasser oder durch ein Erwärmen mit einem Fön vereinfacht werden.

Der so individuell geformte Blumenhalter ist ausreichend statisch tragend für die vorgesehene Menge an Dekorationsmaterial (z. B. Blumen). Ggf. kann das Blumenhaltermaterial hierfür auch doppelt genommen werden bzw. können hierfür mehrere Blumenhalter gestapelt werden.

Das Rohmaterial 30i ist insbesondere für die verschiedenen Anlässe im gewerblichen Bereich (z. B. floristischer Bereich, Hotel- und Gaststättengewerbe, Raumausstattung etc.) insofern sehr hilfreich, als ein benötigter Blumenhalter immer zur Hand ist und auch noch nachträglich individuell ausgeformt werden kann. Im Hinblick auf Transport und Lagerung des Rohmaterials 30i ist die erfindungsgemäß vorgesehene Verformbarkeit auch sehr nützlich, da das Rohmaterial wie in Fig. 13 dargestellt zu einer kompakten Rolle aufgewickelt werden kann.

Fig. 14 veranschaulicht in einer schematischen Schnittansicht den Aufbau des Rohmaterials 30i bzw. Trägerkörpermaterials der daraus zu bildenden Blumenhalter 10i. Dieses Material ist ein Verbundmaterial mit einer biegesteifen, jedoch plastisch verformbaren Komponente 34i, die eine Kernlage des Rohmaterials 30i bildet, sowie mit einer biegeschlaffen Komponente 36i, mittels welcher die Stabilisierungskomponente 34i beidseitig ummantelt ist. Alternativ könnte auch eine gegenseitige Durchdringung einerseits einer biegeschlaffen und andererseits einer biegesteifen, jedoch plastisch verformbaren Komponente vorgesehen sein, etwa indem das Trägerkörpermaterial als ein mit Wachs imprägniertes Fasermaterial ausgebildet wird.

Fig. 15 veranschaulicht eine Variante, bei welcher eine biegesteife Komponente 34k lediglich an einer Flachseite mit einer biegeschlaffen Komponente 36k abgedeckt ist.

Die biegesteife, jedoch plastisch verformbare Komponente 34i bzw. 34k kann beispielsweise aus einer metallischen Netzstruktur oder einem metallischen Blech, insbesondere Lochblech, gebildet sein, wohingegen die biegeschlaffe Komponente 36i bzw. 36k in einfacher Weise z. B. als bruchfestes Kunststoffmaterial ausgebildet sein kann, welches im Gebrauch des Blumenhalters eine Schutzschicht für die biegesteife Komponente bildet.

Fig. 16 veranschaulicht eine Variante, bei welcher ein Blumenhalter 10m aus einem homogenen Material 34m gebildet ist, welches einerseits den gewünschten Grad an plastischer Verformbarkeit und andererseits die notwendige mechanische Stabilität im Gebrauch bereitstellt.

Die zum Durchstecken von Blumenstielen vorgesehenen Öffnungen des Blumenhaltermaterials sind in den Aufbaudarstellungen der Fig. 14 bis 16 nicht ersichtlich. An den entsprechenden Stellen durchsetzen diese Öffnungen sämtliche Komponenten bzw. Lagen des betreffenden Materialaufbaus.

Fig. 17 zeigt den bei dem Ausführungsbeispiel gemäß der Fig. 13 und 14 vorgesehenen Stabilisierungskern 34i in einer Draufsicht. Diese biegesteife, jedoch plastisch verformbare Komponente 34i ist aus einem quadratischen Gitter (Drahtgitter) aus metallischem Werkstoff 38i gebildet. Zur Herstellung des Rohmaterials 30i wird dieses Drahtgitter 34i im Spritzgussverfahren mit der biegeschlaffen Komponente 36i umspritzt. Sodann werden in einer Stanzeinrichtung beidseitig die Stanzlinien 32i eingestanzt und die Öffnungen 14i durchgestanzt. Bei letzterem Durchstanzprozess werden die in den Öffnungsbereichen befindlichen Abschnitte der Materialien 34i und 36i aus dem übrigen Material herausgetrennt.

Die Fig. 18 und 19 zeigen alternative Gestaltungen einer biegesteifen Komponente in Form einer Lochrasterplatte 34n bzw. 34o mit kreisrunden Rasterlöchern bzw. quadratischen Rasterlöchern.

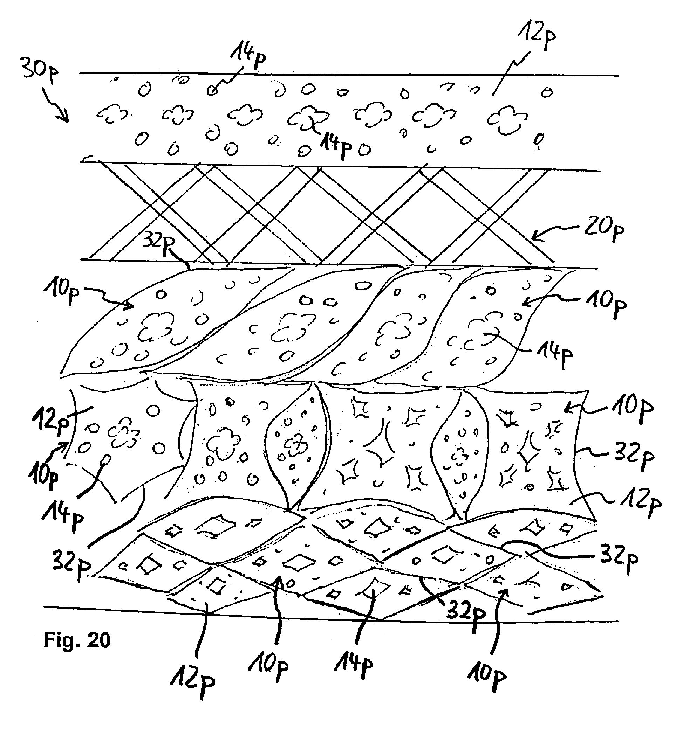

Fig. 20 veranschaulicht ein Rohmaterial 30p. Dargestellt ist eine Vielzahl verschiedener Blumenhalterformen, die entlang von Schneid- und/oder Stanzlinien 32p aus dem vorgefertigten Sortiment entnommen werden können. An einem in Fig. 20 oberen Bereich des Rohmaterials 30p ist dieses frei von solchen Stanzlinien bzw. Schneidlinien. In diesem Bereich kann der Benutzer kreativ tätig werden und eine Blumenhalterform nach eigenen Vorstellungen bzw. den Bedürfnissen angepasst herausschneiden.

Abschließend sei nochmals darauf hingewiesen, dass sämtliche oben für das Rohmaterial beschriebenen Gestaltungen bzw. Gestaltungsvarianten selbstverständlich in entsprechender Weise für die oben beschriebenen, von vornherein einzelnen Blumenhalter vorgesehen sein können. Umgekehrt können selbstverständlich auch sämtliche für die von vornherein einzelnen Blumenhalter beschriebenen Gestaltungen bzw. Gestaltungsvariationen in entsprechender Weise bei dem Rohmaterial eingesetzt werden.

## Patentansprüche

1. Vorrichtung zum Halten von Blumen (16), umfassend einen plattenförmigen Trägerkörper (12), der eine Öffnungsanordnung (14) zum Durchstecken von Blumenstielen aufweist, **dadurch gekennzeichnet, dass** der Trägerkörper (12) plastisch verformbar ist.

2. Vorrichtung nach Anspruch 1, wobei der Trägerkörper (12) aus einem mit Wachs und/oder Harz und/oder Lack und/oder Kunststoff imprägnierten Fasermaterial gebildet ist.

3. Vorrichtung nach Anspruch 2, wobei das Fasermaterial Naturfasern, insbesondere Fasern pflanzlicher Herkunft, umfasst.

4. Vorrichtung nach Anspruch 3, wobei das Fasermaterial ein Karton oder eine Pappe ist.

5. Vorrichtung nach einem der vorangehenden Ansprüche, wobei der Trägerkörper (12) eine mittlere Dicke im Bereich von 0,8 bis 15 mm aufweist.

6. Rohmaterial zur Bildung einer Mehrzahl von Vorrichtungen (10) zum Halten von Blumen (16) nach einem der Ansprüche 1 bis 5, ausgebildet als plastisch verformbare und mit Öffnungen (14) zum Durchstecken von Blumenstielen versehene Trägerkörpermatte (30).

7. Rohmaterial nach Anspruch 6, wobei das Rohmaterial zu einer Rohmaterialrolle aufgerollt ist.

8. Verwendung eines Rohmaterials nach Anspruch 6 oder 7 als Vorrat an Vorrichtungen (10) zum Halten von Blumen (16) oder dergleichen und zum individuellen Bereitstellen von solchen Vorrichtungen (10) aus dem Vorrat.

9. Verwendung nach Anspruch 8 in einem gewerblichen Bereich zur Dekoration von Räumen.
